# EUROPÄISCHE PATENTSCHRIFT

(11) **EP 2 002 166 B1**
(45) Veröffentlichungstag und Bekanntmachung des Hinweises auf die Patenterteilung: **19.05.2010**
(21) Anmeldenummer: 07711848.7
(22) Anmeldetag: 08.03.2007
(51) Int. Cl.: F16L 19/06, F16L 19/08

(54) **VERBINDUNGSANORDNUNG**
CONNECTING ASSEMBLY
DISPOSITIF DE LIAISON

(30) Priorität: 16.03.2006 DE 102006012493
(43) Veröffentlichungstag der Anmeldung: 17.12.2008
(73) Patentinhaber: Eaton Fluid Connectors GmbH, 53797 Lohmar (DE)
(72) Erfinder: ALTENRATH, Jörg, 53797 Lohmar (DE)
(74) Vertreter: Leadbetter, Benedict
(86) Internationale Anmeldenummer: PCT/EP2007/001988
(87) Internationale Veröffentlichungsnummer: WO 2007/104462

(56) Entgegenhaltungen:
- EP-A- 1 484 542
- DE-A1- 4 311 280
- DE-A1- 19 727 149
- GB-A- 2 054 078
- US-A- 3 250 550
- US-A- 3 736 008
- US-A- 5 351 998

## Beschreibung

Die Erfindung betrifft eine Verbindungsanordnung zum Verbinden eines Rohres oder Rohrstutzens mit einem Verbindungskörper, der eine von einer Stirnfläche sich verjüngende Kegelbohrung aufweist, wobei die Verbindungsanordnung eine Längsachse, einen Stützring, der ausgehend von einer ersten Haltefläche eine sich in derselben Richtung wie die Kegelbohrung des Verbindungskörpers erweiternde Kegelbohrung aufweist und der mit einer zweiten Haltefläche gegen die Stirnfläche des Verbindungskörpers abgestützt ist, eine Überwurfmutter, die auf ein Gewinde des Verbindungskörpers aufschraubbar ist und die eine Spannfläche bildet, sowie einen Schneidring, der in der Kegelbohrung des Stützrings sitzt und eine Pressfläche zur Kraftbeaufschlagung durch die Spannfläche der Überwurfmuter aufweist.

Eine solche Verbindungsanordnung ist aus der DE 196 37 129 C2 bekannt. Bei dieser Verbindungsanordnung ist die Spannfläche der Überwurfmutter kegelförmig ausgebildet. Der Stützring weist eine der Spannfläche der Überwurfmutter zugewandte Fläche auf, wobei diese mit einem zur Spannfläche passenden Kegelwinkel ausgebildet ist. Der Schneidring taucht im montierten Zustand so weit in die Kegelbohrung des Stützrings ein, dass sowohl der Stützring als auch der Schneidring an der Spannfläche der Überwurfmutter anliegen.

DE 40 38 539 C1 zeigt eine Verbindungsanordnung, bei der der Schneidring über eine radial zur Rohrachse sich erstreckende Fläche gegen eine ebenfalls radial zur Rohrachse sich erstreckende Anschlagfläche eines Dichtrings abgestützt ist. Hierbei sind der Schneidring und der Dichtring zwischen der Überwurfmutter und dem Verbindungskörper axial hintereinander verspannt.

Die EP 1 484 542 A1 zeigt eine Verbindungsanordnung, bei der ein Stützring mittelbar über einen Schneidring durch eine Überwurfmutter beaufschlagt wird. Hierbei weist der Stützring eine Bohrung mit einem zylindrischen und einem kegelförmigen Abschnitt auf, wobei dieser unmittelbar das Rohr umgibt. Auf der von dem kegelförmigen Abschnitt abgewandten Seite beaufschlagt der Stützring einen weiteren Schneidring mit einer Schneidkante. In dem kegelförmigen Abschnitt des Stützrings ist der Schneidring mit einem eine Schneidkante ausbildenden Abschnitt eingeschoben.

Die DE 197 27 149 A1 zeigt eine Verbindungsanordnung mit einem Stützring, einem Schneidring und einer Überwurfmutter, wobei die Überwurfmutter unmittelbar den Stützring und den Schneidring beaufschlagt. Der Stützring weist einen zylindrischen Abschnitt und einen kegelförmigen Abschnitt auf, wobei der Schneidring von der Seite des zylindrischen Abschnitts in den Stützring eingeschoben ist und im Bereich des kegelförmigen Abschnitts zwei Schneidkanten ausbildet. Auf der von der Überwurfmutter abgewandten Seite schließen der Schneidring und der Stützring axial bündig ab.

Die US 3 736 008 zeigt eine Verbindungsanordnung mit einem Stützring, einem Schneidring und einer Überwurfmutter, wobei die Überwurfmutter den Stützring mittelbar über den Schneidring beaufschlagt. Der Stützring weist einen zylindrischen Abschnitt auf, mit dem er unmittelbar das Rohr umgibt und an dessen Ende zwei Schneidkanten ausgebildet sind. Durch Einschneiden in das Rohr wirft die vordere Schneidkante einen Bandaufwurf auf. Weiterhin weist der Stützring einen kegelförmigen Abschnitt auf, der in einen zweiten zylindrischen Abschnitt größeren Durchmessers mündet. In diesem zylindrischen/kegelförmigen Bereich des Stützrings greift der Schneidring mit einem Abschnitt ein, an dem ebenfalls zwei Schneidkanten ausgebildet sind.

Eine Verbindungsanordnung die eine Überwurfmutter und Schneidring aufweist, aber auf einen Stützring verzichtet, zeigt die DE 43 11 280 A1.

Bei Verbindungsanordnungen der eingangs genannten Art wird der Schneidring durch Aufschrauben der Überwurfmutter auf den Verbindungskörper axial mit Kraft beaufschlagt und bildet einen Bundaufwurf in der Außenfläche des Rohres. Gegen diesen ist der Schneidring im montierten Zustand der Verbindungsanordnung axial abgestützt. Hierdurch ist das Rohr axial gegen den Schneidring und dieser gegen die Überwurfmutter abgestützt, so dass das Rohr nicht aus dem Verbindungskörper gezogen werden kann. Für eine zuverlässige Verbindung ist es daher wichtig, dass der Schneidring tief genug in das Rohr einschneidet, um das Rohr sicher zu halten.

Hierzu ist es üblich, dass die Verbindungsanordnung zunächst vorschriftsmäßig montiert wird. Danach wird die Überwurfmutter wieder von dem Verbindungskörper abgeschraubt und das Rohrende aus dem Verbindungskörper entfernt. Die Schnitttiefer des Schneidrings unterliegt dann einer Sichtkontrolle des Monteurs, der beurteilt, ob der Scheidring tief genug in das Rohr eingeschnitten hat, bevor die Verbindungsanordnung wieder montiert wird. Bei der Sichtkontrolle ist es jedoch möglich, dass der Stützring vom Rohrende und somit vom Rohr rutscht, wodurch eine Wiedermontage aufwendiger wird.

Aufgabe der vorliegenden Erfindung ist es, eine Verbindungsanordnung zu schaffen, bei der die Montage einfacher gestaltet ist.

Die Aufgabe wird erfindungsgemäß durch eine Verbindungsanordnung zum Verbinden eines Rohres mit einem Verbindungskörper, der eine von einer Stirnfläche ausgehende sich verjüngende Kegelbohrung aufweist, umfassend:
eine Längsachse,
ein Rohr, das mit einem Rohrende in die Kegelbohrung des Verbindungskörpers einsteckbar ist,
einen Stützring, der eine sich ausgehend von einer ersten Haltefläche in derselben Richtung wie die Kegelbohrung des Verbindungskörpers erweiternde Kegelbohrung aufweist und der mit einer zweiten Haltefläche gegen die Stirnfläche des Verbindungskörpers abgestützt ist, sowie
eine Überwurfmutter, die auf ein Gewinde des Verbindungskörpers aufschraubbar ist, die eine Spannfläche bildet und zumindest mittelbar axial gegen den Stützring abgestützt ist,
einen Schneidring, der in der Kegelbohrung des Stützrings sitzt, der eine Pressfläche zur Kraftbeaufschlagung durch die Spannfläche der Überwurfmutter aufweist und der zumindest eine erste Schneidkante aufweist und
einen durch Einschneiden der ersten Schneidkante in das Rohr gebildeter Bundaufwurf in der Außenfläche des Rohres, dessen Außendurchmesser größer ist als der kleinste Innendurchmesser des Stützrings und der zwischen dem Rohrende und der ersten Haltefläche angeordnet ist, gelöst.

Die Geometrie des Schneidrings ist derart gestaltet, dass bei einer ausreichenden Schnitttiefe des Schneidrings der Bundaufwurf einen Außendurchmesser aufweist, der größer ist, als der kleinste Innendurchmesser des Stützrings. Somit ist sichergestellt, dass der Stützring nach vorschriftsmäßiger Montage und Demontage der Verbindungsanordnung bei der Sichtkontrolle der Schnitttiefe des Schneidrings nicht vom Rohr rutschen kann.

Ferner sollte die Geometrie des Schneidrings derart gestaltet, dass bei einer nicht ausreichenden Schnitttiefe des Schneidrings der Bundaufwurf einen Außendurchmesser aufweist, der kleiner ist, als der kleinste Innendurchmesser des Stützrings, so dass der Stützring über den Bundaufwurf hinweg zum Rohrende hin bewegt werden kann und vom Rohr entfernt werden kann.

Ob der Schneidring ausreichend tief in das Rohr eingeschnitten hat oder nicht lässt sich dann einfach dadurch feststellen, ob nach Montage und Demontage der Verbindungsanordnung der Stützring auf dem Rohr gehalten ist oder nicht. Lässt er sich nicht über den Bundaufwurf bewegen, ist die Schnitttiefe ausreichend. Lässt er sich über den Bundaufwurf schieben, ist die Schnitttiefe nicht ausreichend.

Vorzugsweise ist im montierten Zustand der Verbindungsanordnung der Stützring mit seiner ersten Haltefläche in Anlage zum Bundaufwurf gehalten. Dies kann dadurch erreicht werden, dass der Schneidring axial bündig mit der ersten Haltefläche des Stützrings abschließt. Der Schneidring kann jedoch auch axial in Richtung zum Rohrende aus der Kegelbohrung des Stützrings und somit von der ersten Haltefläche des Stützrings in Richtung zum Rohrende vorstehen.

Vorzugsweise weist die Überwurfmutter eine Kegelbohrung auf, die eine sich entgegengesetzt zur Kegelbohrung des Verbindungskörpers verjüngende Spannfläche in Form einer Kegelfläche bildet.

Die Schnitttiefe ist abhängig von dem Kegelwinkel der Kegelbohrung des Stützrings und von der Montagelänge, wobei die Montagelänge die Länge ist, über die der Schneidring in das Rohr einschneidet. Zur Begrenzung und definierten Vorgabe des Montageweges kann daher vorgesehen sein, dass im montierten Zustand der Verbindungsanordnung der Schneidring mit einer ersten Anschlagfläche axial gegen eine zweite Anschlagfläche des Stützrings abgestützt ist.

Ferner ist vorzugsweise vorgesehen, dass der Schneidring eine erste Stützfläche aufweist, mittels derer der Schneidring in radialer Richtung auf die Längsachse zu gegen eine zweite Stützfläche des Stützrings abgestützt ist. Hierbei kann die erste Stützfläche die erste Anschlagfläche und die zweite Stützfläche die zweite Anschlagfläche darstellen.

Die Abstützung des Schneidrings gegen den Stützring in radialer Richtung auf die Längsachse zu gewährleistet, dass selbst bei einem Überanzug der Überwurfmutter der Schneidring nicht oder nur geringfügig durch die Kegelfläche der Überwurfmutter radial nach innen verformt wird. Somit wird eine übermäßige Einschnürung des Rohres vermieden. Hierdurch wird die Montagesicherheit erhöht und insbesondere bei dünnwandigen Rohren eine höhere Biegefestigkeit erreicht. Ferner entsteht aufgrund der Tatsache, dass der Schneidring radial nach innen abgestützt ist und nicht nach innen ausweichen kann, bei der Montage ein sehr deutlicher Drehmomentanstieg, der das Montageende anzeigt.

Der Stützring wird bei Übermontage und besonders bei Rohren aus einem hochwertigen Material stark radial nach außen beansprucht und kann aufplatzen. Durch die Abstützung des Schneidrings gegen den Stützring radial nach innen wird bei Montageende eine Kraftkomponente radial nach innen auf den Stützring eingeleitet, wodurch die Gefahr des Aufplatzens reduziert wird.

Bei genormten Überwurfmuttern ist die Spannfläche in Form einer Kegelbohrung mit einem Öffnungswinkel von 90° ausgeführt. Genormte Verbindungskörper weisen eine Kegelbohrung mit einem Öffnungswinkel von 24° auf. In der Regel ist der Öffnungswinkel der Kegelbohrung des Stützrings an den des Verbindungskörpers angepasst und beträgt somit ebenfalls 24°. Da es sich bei dem Stützring jedoch nicht um ein Normteil handelt, kann dieser Winkel angepasst werden, um gegebenenfalls die Einschnitttiefe des Schneidrings in das Rohr anzupassen. Hierdurch lässt sich zudem der Außendurchmesser des Bundaufwurfs anpassen. Der Öffnungswinkel beträgt vorzugsweise 13,2° bis 24,6°. Bei einer bevorzugten Dicke eines Schneidkantenabschnitts des Schneidrings, der die Schneidkante bildet, von 0,22 mm bis 0,58 mm wird somit eine Schnitttiefe von 0,05 mm bis 0,26 mm erreicht.

Der Schneidring weist vorzugsweise einen Stützabschnitt und einen Schneidkantenabschnitt aufweisen, wobei der Stützabschnitt die erste Stützfläche bildet und der Schneidkantenabschnitt in der Kegelbohrung des Stützrings aufgenommen ist.

Die Stützflächen können konisch gestaltet sein. Vorzugsweise ist die erste Stützfläche durch einen umlaufenden Hinterschnitt des Schneidrings und die zweite Stützfläche durch einen umlaufenden Vorsprung des Stützrings gebildet. Hierbei wird der umlaufende Vorsprung im Hinterschnitt aufgenommen.

Der Stützring kann über einen Teil der Länge der Kegelbohrung des Verbindungskörpers in diese hineinragen, so dass die erste Haltefläche in der Kegelbohrung des Verbindungskörpers angeordnet ist. Hierdurch erfährt der Stützring, der stark radial nach außen beansprucht ist, eine Abstützung radial nach außen.

Vorzugsweise verläuft dann der Schneidkantenabschnitt bis in die Kegelbohrung des Verbindungskörpers hinein. Somit ist gewährleistet, dass der Schneidkantenabschnitt indirekt über den in die Kegelbohrung des Verbindungskörpers hineinragenden Stützring radial gegen den Verbindungskörper abgestützt ist. Hierbei kann eine Schneidkante des Schneidrings innerhalb der Kegelbohrung des Verbindungskörpers angeordnet sein, die somit radial abgestützt ist.

Vorzugweise weist der Schneidring zwei Schneidkanten auf. Hierbei kann einer der Schneidkanten innerhalb der Kegelbohrung des Verbindungskörpers und die andere Schneidkante außerhalb der Kegelbohrung des Verbindungskörpers angeordnet sein.

Durch die Kegelbohrung des Verbindungskörpers, den Stützring und das Rohr kann ein Aufnahmeraum gebildet sein, in dem ein Dichtring aufgenommen ist.

Die Überwurfmutter kann im montierten Zustand der Verbindungsanordnung mittelbar über den Schneidring gegen den Stützring axial abgestützt sein. Hierzu kann vorgesehen sein, dass die Überwurfmutter mit ihrer Spannfläche axial gegen die Pressfläche des Schneidrings abgestützt ist und dass der Schneidring mit einer ersten Stützfläche axial gegen eine zweite Stützfläche des Stützrings abgestützt ist.

Alternativ kann vorgesehen sein, dass im montierten Zustand der Verbindungsanordnung die Spannfläche der Überwurfmutter sowohl unmittelbar gegen die zweite Stützfläche des Stützrings als auch gegen die Pressfläche des Schneidrings axial abgestützt ist.

Ein bevorzugtes Ausführungsbeispiel wird im folgenden anhand der Zeichnungen näher erläutert. Hierin zeigt
- Figur 1: einen Längsschnitt einer erfindungsgemäßen Verbindungsanordnung im montierten Zustand,
- Figur 2: einen vergrößert dargestellten Ausschnitt der Verbindungsanordnung gemäß Figur 1 und
- Figur 3: eine vergrößert dargestellten Ausschnitt des Bundaufwurfs gemäß Figur 1.

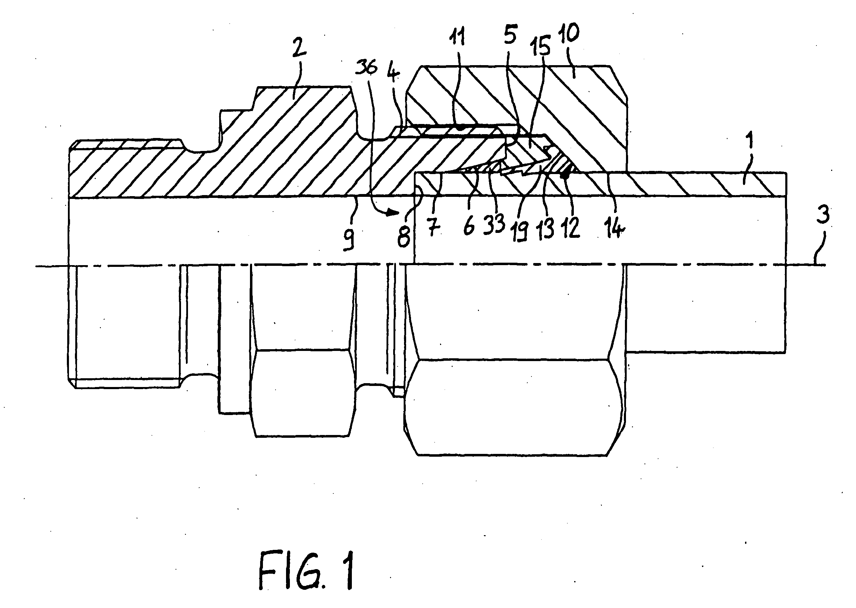

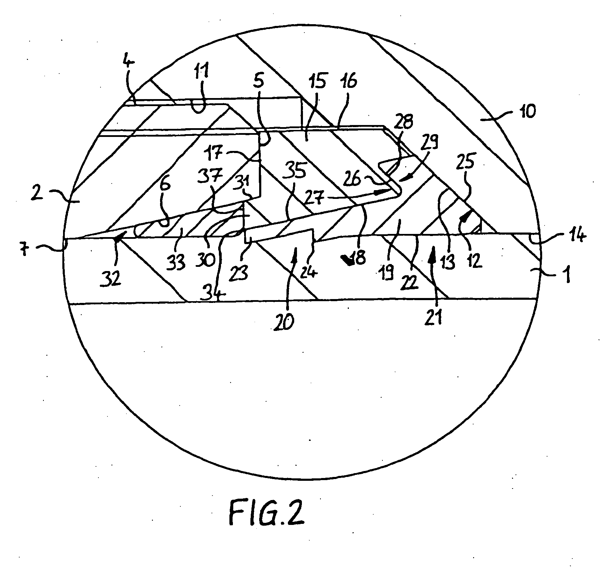

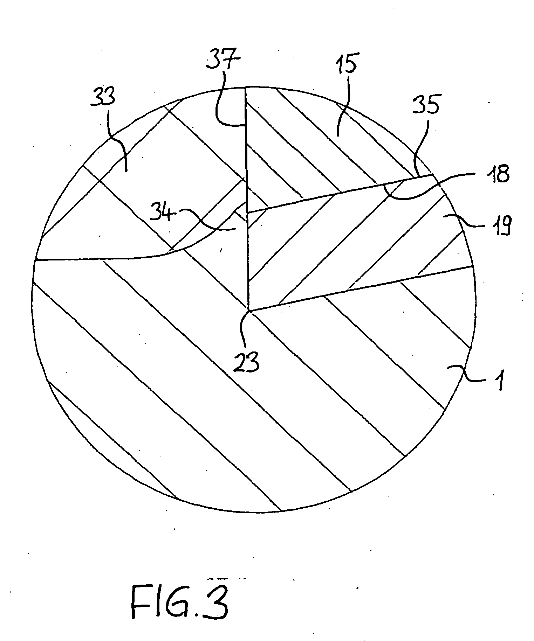

Die Figuren 1 bis 3 zeigen eine erfindungsgemäße Verbindungsanordnung, bei der ein Rohr 1 mit einem Verbindungskörper 2 verbunden wird. Die Figuren 1 bis 3 werden im folgenden zusammen beschrieben. Die Verbindungsanordnung weist eine Längsachse 3 auf, zu der das Rohr 1 und der Verbindungskörper 2 zentriert angeordnet sind. Der Verbindungskörper 2 ist auf seiner Außenfläche mit einem Gewinde 4 versehen, dass von einer Stirnfläche 5 ausgeht. Von der Stirnfläche 5 geht ferner eine auf der Längsachse 3 zentrierte Kegelbohrung 6 aus, die einen genormten Öffnungswinkel von 24° aufweist. An diese schließt sich eine erste zylindrische Bohrung 7 an, deren Durchmesser auf den des Rohres 1 abgestimmt ist. Die erste zylindrische Bohrung 7 endet in einer Ringfläche 8, von der aus eine im Durchmesser reduzierte zweite zylindrische Bohrung 9 weiterführt. Das Rohr 1 weist ein Rohrende 36 auf, mit dem es in die Bohrung 7 gesteckt ist. Die Ringfläche 8 dient zur Abstützung des Rohres 1 gegen den Verbindungskörper 2 in axialer Richtung.

Auf den Verbindungskörper 2 ist eine Überwurfmutter 10 aufgeschraubt, welche eine Bohrung mit einem Gewinde 11 besitzt, das zum Gewinde 4 des Verbindungskörpers 2 passt. Im Anschluss an das Gewinde 11 ist am vom Verbindungskörper 2 abgewandten Ende der Überwurfmutter 10 eine Kegelbohrung 12 vorgesehen, deren Öffnungswinkel genormt ist und 90° beträgt und welche eine sich entgegen gesetzte zur Kegelbohrung 6 des Verbindungskörpers 2 verjüngende Spannfläche 13 in Form einer Kegelfläche bildet. Die Kegelbohrung 12 der Überwurfmutter 10 endet in einer im Durchmesser reduzierten zylindrischen Bohrung 14, die auf den Außendurchmesser des Rohres 1 abgestimmt ist. Die Überwurfmutter 10 ist über das Rohr 1 geschoben.

Ferner ist ein Stützring 15 vorhanden, dessen Außenfläche 16 einen Durchmesser aufweist, der so groß bemessen ist, dass die Überwurfmutter 10 ihn mit ihrem Gewinde 11 passieren kann. Der Stützring 15 besitzt eine zweite Haltefläche 17, die im montierten Zustand flächig an der Stirnfläche 5 des Verbindungskörpers 2 anliegt. Der Stützring 15 weist ferner eine Kegelbohrung 18 auf, die sich entgegengesetzt zur Kegelbohrung 12 der Überwurfmutter 10 verjüngt. Der Öffnungswinkel der Kegelbohrung 18 des Stützrings 15 beträgt vorzugsweise 13,2° bis 24,6° und kann demnach dem genormten Kegelwinkel von 24° des Verbindungskörpers 2 entsprechen.

Das Rohr 1, die Kegelbohrung 6 des Verbindungskörpers 2 und eine erste Haltefläche 37 des Stützrings 15 bilden zusammen einen Aufnahmeraum 32 zur Aufnahme eines Dichtrings 33. Der Dichtring 33 kann als separater Ring ausgebildet sein oder mit dem Stützring 15 z.B. durch Anvulkanisieren fest verbunden sein.

Ferner ist ein Schneidring 19 vorgesehen. Der Schneidring 19 weist einen Schneidkantenabschnitt 20 sowie einen Stützabschnitt 21 auf. Der Schneidkantenabschnitt 20 ist konisch gestaltet und in der Kegelbohrung 18 des Stützrings 15 aufgenommen. Der Schneidring 19 weist eine Bohrung 22 auf, mit der er auf das Rohr 1 aufgeschoben ist. Die Bohrung 22 ist im Bereich des Schneidkantenabschnitt 20 derart gestalte, dass eine vordere Schneidkante 23 und eine hintere Schneidkante 24 gebildet sind.

Der Stützabschnitt 21 ist zur Überwurfmutter 10 hin angeordnet. Der Stützabschnitt 21 bildet eine konusförmige Pressfläche 25, die an die Kegelbohrung 12 der Überwurfmutter 10 angepasst ist und zu dieser in Anlage ist.

Der Schneidring 19 wird durch Aufschrauben der Überwurfmutter 10 auf den Verbindungskörper 2 axial mit Kraft beaufschlagt und bildet einen Bundaufwurf 34 in der Außenfläche des Rohres 1. Gegen diesen ist der Schneidring 19 im montierten Zustand der Verbindungsanordnung axial abgestützt. Hierdurch ist das Rohr 1 axial gegen den Schneidring 19 und dieser gegen die Überwurfmutter 10 abgestützt, so dass das Rohr 1 nicht aus dem Verbindungskörper 2 gezogen werden kann.

Die Geometrie des Schneidrings 19, das heißt die Dicke des Schneidkantenabschnitts 20, der Öffnungswinkel der Kegelfläche 35 des Schneidrings 19 im Bereich des Schneidkantenabschnitts 20 sowie der Innendurchmesser des Schneidrings 19 im nicht montierten und nicht deformierten Zustand im Verhältnis zum Außendurchmesser des Rohres 1, ist derart gestaltet, dass bei einer ausreichenden Schnitttiefe des Schneidrings 19 der Bundaufwurf 34 einen Außendurchmesser aufweist, der größer ist, als der kleinste Innendurchmesser des Stützrings 15. Der Bundaufwurf 34 ist hierbei zwischen dem Rohrende 36 und der ersten Haltefläche 37 angeordnet. Der Stützring 15 ist mit seiner ersten Haltefläche 37 in Anlage zum Bundaufwurf 34 gehalten. Hierzu ist vorgesehen, dass der Schneidring 19 zumindest axial bündig mit der ersten Haltefläche 37 des Stützrings abschließt. Es ist demnach auch möglich, dass der Schneidkantenabschnitt 20 mit der ersten Haltefläche 37 aus der Kegelbohrung 18 des Stützrings 15 in Richtung zum Rohrende 36 vorragt. Somit ist sichergestellt, dass der Stützring 15 nach vorschriftsmäßiger Montage und Demontage der Verbindungsanordnung bei einer Sichtkontrolle der Schnitttiefe des Schneidrings 19 nicht vom Rohr 1 rutschen kann.

Ferner sollte die Geometrie des Schneidrings 19 derart gestaltet sein, dass bei einer nicht ausreichenden Schnitttiefe des Schneidrings 19 der Bundaufwurf 34 einen Außendurchmesser aufweist, der kleiner ist, als der kleinste Innendurchmesser des Stützrings 15, so dass der Stützring 15 über den Bundaufwurf hinweg zum Rohrende 36 hin bewegt werden kann und vom Rohr 1 entfernt werden kann.

Der Stützabschnitt 21 bildet ferner eine erste Stützfläche 26, die dem Stützring 15 zugewandt und durch einen umlaufenden Hinterschnitt 27 dargestellt ist. Die erste Stützfläche 26 öffnet sich konusförmig in Richtung zum Stützring 15.

Der Stützring 15 bildet eine zweite Stützfläche 28, die ebenfalls konusförmig gestalte ist und den gleichen Öffnungswinkel aufweist, wie die erste Stützfläche 26. Die zweite Stützfläche 28 ist durch einen umlaufenden Vorsprung 29 des Stützrings 15 gebildet, der in dem Hinterschnitt 27 des Schneidrings 19 aufgenommen ist. Die erste Stützfläche 26 ist gegen die zweite Stützfläche 28 abgestützt. Durch die konusförmige Ausgestaltung der Stützflächen 26, 28 ist der Schneidring 19 gegen Deformation radial nach innen in Richtung auf die Längsachse 3 zu abgestützt.

Die erste Stützfläche 26 stellt zudem eine erste Anschlagfläche und die zweite Stützfläche 28 eine zweite Anschlagfläche dar, wobei der Schneidring 19 zur Begrenzung des Montageweges, d. h. des Weges, über den der Schneidring 19 in das Rohr 1 einschneidet, mit der ersten Anschlagfläche 26 axial gegen die zweite Anschlagfläche 28 des Stützrings 15 abgestützt ist.

Der Stützring 15 weist ferner einen Halteabschnitt 30 auf, mit dem der Stützring 15 in die Kegelbohrung 6 des Verbindungskörpers 2 eintaucht und sich über einen Teil der Länge der Kegelbohrung 6 erstreckt. Der Halteabschnitt 30 weist eine Außenfläche 31 auf, die ebenfalls konusförmig ist und an die Kegelbohrung 6 des Verbindungskörpers 2 angepasst ist. Der Schneidkantenabschnitt 20 des Schneidrings 19 taucht in die Kegelbohrung 18 des Stützrings 15 so tief ein, dass er bis in die Kegelbohrung 6 des Verbindungskörpers 2 verläuft. Die vordere Schneidkante 23 ist an dem in die Kegelbohrung 6 des Verbindungskörpers 2 eintauchenden Ende des Schneidkantenabschnitts 20 ausgebildet, so dass diese radial über den Halteabschnitt 30 gegen den Verbindungskörper 2 abgestützt ist. Die hintere Schneidkante 24 ist innerhalb des Stützrings 15 und außerhalb der Konusbohrung 6 des Verbindungskörpers 2 angeordnet. Somit ergeben sich höherer Berstdrücke der Schneidringverbindung.

Der Halteabschnitt 30 dient ferner dazu, den Stützring 15 über die Außenfläche 31 des Halteabschnitts 30 in der Kegelbohrung 6 des Verbindungskörpers 2 zu verspannen, so dass die Reibkraft zwischen dem Verbindungskörper 2 und dem Stützring 15 größer ist als zwischen dem Schneidring 19 und der Überwurfmutter 10. Ferner ist die Reibkraft zwischen dem Stützring 15 und dem Schneidring 19 größer als zwischen dem Schneidring 19 und der Überwurfmutter 10, so dass sich beim Anziehen der Überwurfmutter 10 diese relativ zum Schneidring 19 dreht und nicht der Schneidring 19 relativ zum Stützring 15 oder der Stützring 15 relativ zum Verbindungskörper 2. Somit wird wirksam vermieden, dass sich beim Anziehen der Überwurfmutter 10 das Rohr 1 zusammen mit der Überwurfmutter 10 dreht.

Die radiale Abstützung des Schneidrings 19 gegenüber dem Stützring 15 verhindert eine radiale Deformation des Schneidrings 19 und somit eine Einschnürung des Rohrs 1. Hierdurch ergeben sich höhere Berstdrücke der Verbindungsanordnung, da das Rohr 1 geringer belastet wird. Ferner wird das Montageende durch einen deutlichen Drehmomentanstieg angezeigt.

### Bezugszeichenliste

- 1: Rohr
- 2: Verbindungskörper
- 3: Längsachse
- 4: Gewinde des Verbindungskörpers
- 5: Stirnfläche
- 6: Kegelbohrung des Verbindungskörpers
- 7: erste zylindrische Bohrung
- 8: Ringfläche
- 9: zweite zylindrische Bohrung
- 10: Überwurfmutter
- 11: Gewinde der Überwurfmutter
- 12: Kegelbohrung der Überwurfmutter
- 13: Spannfläche
- 14: zylindrische Bohrung
- 15: Stützring
- 16: Außenfläche
- 17: zweite Haltefläche
- 18: Kegelbohrung des Stützrings
- 19: Schneidring
- 20: Schneidkantenabschnitt
- 21: Stützabschnitt
- 22: Bohrung
- 23: vordere Schneidkante
- 24: hintere Schneidkante
- 25: Pressfläche
- 26: erste Stützfläche
- 27: Hinterschnitt
- 28: zweite Stützfläche
- 29: Vorsprung
- 30: Halteabschnitt
- 31: Außenfläche
- 32: Aufnahmeraum
- 33: Dichtring
- 34: Bundaufwurf
- 35: Kegelfläche des Schneidrings
- 36: Rohrende
- 37: erste Haltefläche

## Patentansprüche

1. Verbindungsanordnung zum Verbinden eines Rohres (1) mit einem Verbindungskörper (2), der eine von einer Stirnfläche (5) ausgehende sich verjüngende Kegelbohrung (6) aufweist, umfassend:
eine Längsachse (3),
ein Rohr (1), das mit einem Rohrende (36) in die Kegelbohrung (6) des Verbindungskörpers (2) einsteckbar ist,
einen Stützring (15), der eine sich ausgehend von einer ersten Haltefläche (37) in derselben Richtung wie die Kegelbohrung (6) des Verbindungskörpers (2) erweiternde Kegelbohrung (18) aufweist und der mit einer zweiten Haltefläche (17) gegen die Stirnfläche (5) des Verbindungskörpers (2) abgestützt ist, sowie
eine Überwurfmutter (10), die auf ein Gewinde (4) des Verbindungskörpers (2) aufschraubbar ist, die eine Spannfläche (13) bildet und zumindest mittelbar axial gegen den Stützring (15) abgestützt ist,
einen Schneidring (19), der in der Kegelbohrung (18) des Stützrings (15) sitzt, der eine Pressfläche (25) zur Kraftbeaufschlagung durch die Spannfläche (13) der Überwurfmutter (10) aufweist und der zumindest eine erste Schneidkante (23) aufweist, wobei die Verbindungsanordnung **gekennzeichnet ist durch**
einen **durch** Einschneiden der ersten Schneidkante (23) in das Rohr (1) gebildeten Bundaufwurf (34) in der Außenfläche des Rohres (1), dessen Außendurchmesser größer ist als der kleinste Innendurchmesser des Stützrings (15) und der zwischen dem Rohrende (36) und der ersten Haltefläche (37) angeordnet ist.

2. Verbindungsanordnung nach Anspruch 1,
**dadurch gekennzeichnet,**
**dass** der Stützring (15) mit seiner ersten Haltefläche (37) in Anlage zum Bundaufwurf (34) ist.

3. Verbindungsanordnung nach einem der Ansprüche 1 oder 2,
**dadurch gekennzeichnet,**
**dass** der Schneidring (19) axial bündig mit der ersten Haltefläche (37) des Stützrings (15) abschließt oder axial in Richtung zum Rohrende (36) vorsteht.

4. Verbindungsanordnung nach einem der Ansprüche 1 bis 3,
**dadurch gekennzeichnet,**
**dass** der Schneidring (19) zur Begrenzung des Montageweges mit einer ersten Anschlagfläche (26) axial gegen eine zweite Anschlagfläche (28) des Stützrings (15) abgestützt ist.

5. Verbindungsanordnung nach einem der Ansprüche 1 bis 4,
**dadurch gekennzeichnet,**
**dass** der Schneidring (19) eine erste Stützfläche (26) aufweist, mittels derer der Schneidring (19) in radialer Richtung auf die Längsachse (3) zu gegen eine zweite Stützfläche (28) des Stützrings abgestützt ist.

6. Verbindungsanordnung nach Anspruch 5,
**dadurch gekennzeichnet,**
**dass** die erste Stützfläche (26) eine erste Anschlagfläche und die zweite Stützfläche (28) eine zweite Anschlagfläche darstellt, wobei der Schneidring (19) zur Begrenzung des Montagewegs mit der ersten Anschlagfläche axial gegen die zweite Anschlagfläche des Stützrings (15) abgestützt ist.

7. Verbindungsanordnung nach einem der Ansprüche 5 oder 6,
**dadurch gekennzeichnet,**
**dass** der Schneidring (19) einen Stützabschnitt (21) und einen Schneidkantenabschnitt (20) aufweist,
wobei der Stützabschnitt (21) die erste Stützfläche (26) bildet und
wobei der Schneidkantenabschnitt (20) in der Kegelbohrung (18) des Stützrings (15) aufgenommen ist.

8. Verbindungsanordnung nach einem der Ansprüche 5 bis 7,
**dadurch gekennzeichnet,**
**dass** die Stützflächen (26, 28) konisch gestaltet sind.

9. Verbindungsanordnung nach einem der Ansprüche 5 bis 8,
**dadurch gekennzeichnet,**
**dass** die erste Stützfläche (26) durch einen umlaufenden Hinterschnitt (27) des Schneidrings (19) und die zweite Stützfläche (28) durch einen umlaufenden Vorsprung (29) des Stützrings (15) gebildet sind.

10. Verbindungsanordnung nach einem der Ansprüche 1 bis 9,
**dadurch gekennzeichnet,**
**dass** der Stützring (15) über einen Teil der Länge der Kegelbohrung (6) des Verbindungskörpers (2) in diese hineinragt und somit die erste Haltefläche (37) in der Kegelbohrung (6) des Verbindungskörpers (2) angeordnet ist.

11. Verbindungsanordnung nach einem der Ansprüche 1 bis 10,
**dadurch gekennzeichnet,**
**dass** der Schneidkantenabschnitt (20) bis in die Kegelbohrung (6) des Verbindungskörpers (2) verläuft.

12. Verbindungsanordnung nach Anspruch 11,
**dadurch gekennzeichnet,**
**dass** die erste Schneidkante (23) innerhalb der Kegelbohrung (6) des Verbindungskörpers (2) angeordnet ist.

13. Verbindungsanordnung nach einem der Ansprüche 1 bis 12,
**dadurch gekennzeichnet,**
**dass** der Schneidring (19) zusätzlich zu der ersten Schneidkante (23) eine zweite Schneidkante (24) aufweist.

14. Verbindungsanordnung nach einem der Ansprüche 1 bis 13,
**dadurch gekennzeichnet,**
**dass** die Überwurfmutter (10) mittelbar über den Schneidring (19) gegen den Stützring (15) axial abgestützt ist.

15. Verbindungsanordnung nach Anspruch 14,
**dadurch gekennzeichnet,**
**dass** die Überwurfmutter (10) mit ihrer Spannfläche (13) axial gegen die Pressfläche (25) des Schneidrings (19) abgestützt ist und
**dass** der Schneidring (19) mit einer ersten Stützfläche (26) axial gegen eine zweite Stützfläche (28) des Stützrings (15) abgestützt ist.

16. Verbindungsanordnung nach einem der Ansprüche 1 bis 13,
**dadurch gekennzeichnet,**
**dass** die Spannfläche (13) der Überwurfmutter (10) sowohl gegen die zweite Stützfläche (28) des Stützrings (15) als auch gegen die Pressfläche (25) des Schneidrings (19) axial abgestützt ist.

## Claims

1. Connecting assembly for connecting a pipe (1) with a connecting element (2) which comprises a conical bore (6) that tapers starting from a face (5), comprising:
a longitudinal axis (3); a pipe (1) having a pipe end (36) that can be inserted into the conical bore (6) of the connecting element (2);
a supporting ring (15) having a conical bore starting from a first retaining surface (37) and flaring in the same direction as the conical bore (6) of the connecting element (2) and having a second retaining surface (17) being supported by the face (5) of the connecting element (2);
a union nut (10) which can be screwed on a thread (4) of the connecting element (2) and which forms a tensioning surface (13) and is supported axially at least indirectly on the supporting ring (15);
a cutting ring (19) seated in the conical bore (18) of the supporting ring (15) and provided with a pressure surface (25) for the impingement of force by the tensioning surface (13) of the union nut (10), and having at least one first cutting edge (23), whereas the connecting assembly is **characterized in that**
a collar bulge (34) on the outer surface of the pipe (1) formed by cutting the first cutting edge (23) into the pipe (1), said collar bulge's outside diameter being greater than the smallest inside diameter of the supporting ring (15) and said collar bulge being located between the pipe end (36) and the first retaining surface (37).

2. Connecting assembly in accordance with Claim 1,
**characterized in that**
the first retaining surface (37) of the supporting ring (15) is in abutment with the collar bulge (34).

3. Connecting assembly in accordance with one of the Claims 1 or 2,
**characterized in that**
the cutting ring (19) is axially flush adjoining the first retaining surface (37) of the supporting ring (15)or projects axially in the direction of the pipe end (36).

4. Connecting assembly in accordance with one of the Claims 1 through 3,
**characterized in that**,
in order to limit the assembly path, the cutting ring (19) abuts with a first abutment surface (26) axially against a second abutment surface (28) of the supporting ring (15).

5. Connecting assembly in accordance with one of the Claims 1 through 4,
**characterized in that**,
the cutting ring (19) comprises a first supporting surface (26) by means of which the cutting ring (19) is supported in radial direction toward the longitudinal axis (3) against a second supporting surface (28) of the supporting ring .

6. Connecting assembly in accordance with Claim 5,
**characterized in that**,
the first supporting surface (26) represents a first abutment surface, and the second supporting surface (28) represents a second abutment surface, whereby the cutting ring (19), in order to limit the assembly path, is supported with the first abutment surface axially against the second abutment surface of the supporting ring (15).

7. Connecting assembly in accordance with one of the Claims 5 or 6,
**characterized in that**
the cutting ring (19) has a supporting section (21) and a cutting edge section (20), whereby the supporting section (21) represents the first supporting section (26), and whereby the cutting edge section (20) is accommodated in the conical bore (18) of the supporting ring (15).

8. Connecting assembly in accordance with one of the Claims 5 through 7,
**characterized in that**
the supporting surfaces (26, 28) are conical.

9. Connecting assembly in accordance with one of the Claims 5 through 8,
**characterized in that**
the first supporting surface (26) is formed by a peripheral undercut (27) of the cutting ring (19), and the second supporting surface (28) is formed by a peripheral projection (29) of the supporting ring (15).

10. Connecting assembly in accordance with one of the Claims 1 through 9,
**characterized in that**
the supporting ring (15) projects over part of the length of the conical bore (6) of the connecting element (2) into said connecting element, and thus the first retaining surface (37) is located in the conical bore (6) of the connecting element (2).

11. Connecting assembly in accordance with one of the Claims 1 through 10,
**characterized in that**
the cutting edge section (20) extends into the conical bore (6) of the connecting element (2).

12. Connecting assembly in accordance with Claim 11,
**characterized in that**
the first cutting edge (23) is located inside the conical bore (6) of the connecting element (2).

13. Connecting assembly in accordance with one of the Claims 1 through 12,
**characterized in that**
the cutting ring (19) comprises a second cutting edge (24) in addition to the first cutting edge (23).

14. Connecting assembly in accordance with one of the Claims 1 through 13,
**characterized in that**
the union nut (10) is indirectly axially supported against the supporting ring (15) via the cutting ring (19).

15. Connecting assembly in accordance with Claim 14,
**characterized in that**
the tensioning surface (13) of the union nut (10) is axially supported against the pressure surface (25) of the cutting ring (19), and that the first supporting surface (26) of the cutting ring (19) is axially supported against a second supporting surface (28) of the supporting ring (15).

16. Connecting assembly in accordance with one of the Claims 1 through 13,
**characterized in that**
the tensioning surface (13) of the union nut (10) is axially supported against the second supporting surface (28) of the supporting ring (15) as well as against the pressure surface (25) of the cutting ring (19).

## Revendications

1. Dispositif de connexion pour connecter un tuyau (1) à un corps de connexion (2) qui présente un alésage conique (6) se rétrécissant en partant d'une surface frontale (5), comprenant :
un axe longitudinal (3),
un tuyau (1) qui peut être inséré avec une extrémité de tuyau (36) dans l'alésage conique (6) du corps de connexion (2),
une bague d'appui (15) qui présente un alésage conique (18) s'élargissant en partant d'une première surface de retenue (37) dans la même direction que l'alésage conique (6) du corps de connexion (2) et qui est appuyée avec une seconde surface de retenue (17) contre la surface frontale (5) du corps de connexion (2), ainsi
qu'un écrou d'accouplement (10) qui peut être vissé sur un filetage (4) du corps de connexion (2), qui forme une surface de serrage (13) et est appuyé au moins indirectement de manière axiale contre la bague d'appui (15),
une bague coupante (19) qui siège dans l'alésage conique (18) de la bague d'appui (15), qui présente une surface de pression (25) pour la sollicitation en force par la surface de serrage (13) de l'écrou d'accouplement (10) et qui présente au moins une première arête de coupe (23), le dispositif de connexion étant **caractérisé par**
un bourrelet à collerette (34) formé par entaille de la première arête de coupe (23) dans le tuyau (1), dans la surface externe du tuyau (1), dont le diamètre externe est supérieur au diamètre interne le plus petit de la bague d'appui (15) et qui est disposé entre l'extrémité de tuyau (36) et la première surface de retenue (37).

2. Dispositif de connexion selon la revendication 1,
**caractérisé en ce**
**que** la bague d'appui (15) est en appui avec le bourrelet à collerette (34) avec sa première surface de retenue (37).

3. Dispositif de connexion selon l'une quelconque des revendications 1 ou 2,
**caractérisé en ce**
**que** la bague coupante (19) se termine axialement à fleur avec la première surface de retenue (37) de la bague d'appui (15) ou fait saillie axialement en direction de l'extrémité de tuyau (36).

4. Dispositif de connexion selon l'une quelconque des revendications 1 à 3,
**caractérisé en ce**
**que** la bague coupante (19) est appuyée axialement avec une première surface de butée (26) contre une seconde surface de butée (28) de la bague d'appui (15) en vue de limiter la course de montage.

5. Dispositif de connexion selon l'une quelconque des revendications 1 à 4,
**caractérisé en ce**
**que** la bague coupante (19) présente une première surface d'appui (26) au moyen de laquelle la bague coupante (19) est appuyée contre une seconde surface d'appui (28) de la bague d'appui en direction radiale de l'axe longitudinal (3).

6. Dispositif de connexion selon la revendication 5,
**caractérisé en ce**
**que** la première surface d'appui (26) représente une première surface de butée et la seconde surface d'appui (28) une seconde surface de butée, la bague coupante (19) étant appuyée axialement avec la première surface de butée contre la seconde surface de butée de la bague d'appui (15) en vue de limiter la course de montage.

7. Dispositif de connexion selon l'une quelconque des revendications 5 ou 6,
**caractérisé en ce**
**que** la bague coupante (19) présente une section d'appui (21) et une section d'arête de coupe (20),
la section d'appui (21) formant la première surface d'appui (26) et
la section d'arête de coupe (20) étant reçue dans l'alésage conique (18) de la bague d'appui (15).

8. Dispositif de connexion selon l'une quelconque des revendications 5 à 7,
**caractérisé en ce**
**que** les surfaces d'appui (26, 28) sont configurées de manière conique.

9. Dispositif de connexion selon l'une quelconque des revendications 5 à 8,
**caractérisé en ce**
**que** la première surface d'appui (26) est formée par une contre-dépouille périphérique (27) de la bague coupante (19) et la seconde surface d'appui (28) est formée par une saillie périphérique (29) de la bague d'appui (15).

10. Dispositif de connexion selon l'une quelconque des revendications 1 à 9,
**caractérisé en ce**
**que** la bague d'appui (15) dépasse sur une partie de la longueur de l'alésage conique (6) du corps de connexion (2) dans celui-ci et la première surface de retenue (37) est ainsi disposée dans l'alésage conique (6) du corps de connexion (2).

11. Dispositif de connexion selon l'une quelconque des revendications 1 à 10,
**caractérisé en ce**
**que** la section d'arête de coupe (20) s'étend jusque dans l'alésage conique (6) du corps de connexion (2).

12. Dispositif de connexion selon la revendication 11,
**caractérisé en ce**
**que** la première arête de coupe (23) est disposée au sein de l'alésage conique (6) du corps de connexion (2).

13. Dispositif de connexion selon l'une quelconque des revendications 1 à 12,
**caractérisé en ce**
**que** la bague coupante (19) présente, outre la première arête de coupe (23), une seconde arête de coupe (24).

14. Dispositif de connexion selon l'une quelconque des revendications 1 à 13,
**caractérisé en ce**
**que** l'écrou d'accouplement (10) est appuyé de manière axiale contre la bague d'appui (15) indirectement par le biais de la bague coupante (19).

15. Dispositif de connexion selon la revendication 14,
**caractérisé en ce**
**que** l'écrou d'accouplement (10) est appuyé avec sa surface de serrage (13) axialement contre la surface de pression (25) de la bague coupante (19) et
**que** la bague coupante (19) est appuyée avec une première surface d'appui (26) axialement contre une seconde surface d'appui (28) de la bague d'appui (15).

16. Dispositif de connexion selon l'une quelconque des revendications 1 à 13,
**caractérisé en ce**
**que** la surface de serrage (13) de l'écrou d'accouplement (10) est appuyée axialement aussi bien contre la seconde surface d'appui (28) de la bague d'appui (15) que contre la surface de pression (25) de la bague coupante (19).
